# FASCICULE DE BREVET EUROPEEN

(11) **EP 0 595 389 B1**
(45) Date de publication et mention de la délivrance du brevet: **28.04.1999**
(21) Numéro de dépôt: 93202887.1
(22) Date de dépôt: 14.10.1993
(51) Int. Cl.: G01F 25/00, G01F 23/00

(54) **Procédé pour la fabrication d'un réservoir à liquide muni d'une jauge, son utilisation pour la fabrication d'un réservoir en matière plastique et réservoir ainsi obtenu**
Herstellungsverfahren für einen mit einem Geber versehenen Flüssigkeitstank; Anwendung bei der Herstellung eines Kunststofftanks und solcherart hergestellter Tank
Method of fabricating a liquid-tank equipped with a gauge, use of such a method for fabricating such a tank out of plastic material and resulting tank

(30) Priorité: 26.10.1992 BE 9200920
(43) Date de publication de la demande: 04.05.1994
(73) Titulaire: SOLVAY (Société Anonyme), B-1050 Bruxelles (BE)
(72) Inventeur: Drowart, Guy, B-1070 Bruxelles (BE); Wouters, Paul, B-1800 Vilvoorde (BE)
(74) Mandataire: Decamps, Alain René François

(56) Documents cités:
- DE-A- 3 324 742
- PROCEEDINGS IECON'84 1984 INTERNATIONAL CONFERENCE ON INDUSTRIAL ELECTRONICS,CONTROL AND INSTRUMENTATION TOKYO JAPAN/OCTOBER 22-26,1984 vol. 1 , 1984,NEW-YORK,NY,USA,IEEE,USA pages 293 - 296 KOBAYASHI;SUZUKI 'COMPUTER AIDED CAPACITIVE SENSING FUEL LEVEL MEASURING SYSTEM FOR AUTOMOTIVE USE'
- KUNSTSTOFFE vol. 77, no. 3 , 1987 pages 257 - 261 OTTO;HEISE 'RECHNERGESTUTZTES AUSLEGEN VON KUNSTSTOFF-KRAFTSTOFFBEHALTERN'

## Description

L'invention concerne un procédé pour la fabrication d'un réservoir à liquide muni d'une jauge du volume de liquide contenu dans le réservoir, son utilisation pour la fabrication d'un réservoir en matière plastique, équipé d'une jauge, produit notamment par la technique de moulage par soufflage ainsi que le réservoir ainsi obtenu.

Il concerne plus particulièrement un procédé pour fabriquer un réservoir à carburant muni d'une jauge et destiné à être monté sur un véhicule automobile.

Le problème posé par l'imprécision des valeurs affichées par une jauge à carburant notamment lorsque le véhicule subit les inclinaisons du sol sur la surface duquel il se déplace est connu depuis longtemps par les fabricants de véhicules automobiles. Les techniques utilisées jusqu'ici pour réduire cette imprécision reposent toutes sur le choix d'une jauge prédéfinie et sur la détermination des volumes du réservoir situés sous un plan de coupe passant par les différents points de la trajectoire de la jauge donnée.

Ainsi, dans le document "Rechnergestütztes Auslegen von Kunststoff-Kraftstoffbehältern" H. Otto et R. Heise, Kunststoffe 77, 1987, 3, Pages 257 à 261, on divulgue l'utilisation des techniques de conception assistée par ordinateur pour définir des réservoirs en matière plastique destinés au stockage de carburant dans les véhicules automobiles et établir la courbe d'étalonnage de la jauge. Ces techniques permettent aussi de calculer et de visualiser l'emplacement d'une zone située sur la surface supérieure du réservoir apte à recevoir un évent qui ne risque pas de se retrouver sous le niveau de carburant lorsque le réservoir subit les diverses inclinaisons imprimées par une utilisation normale du véhicule.

La demande de brevet DE-A-3324742 et le document "Computer-aided capacitive sensing fuel level measuring system for automotive use" de Kobayashi et Suzuki, IECON'84 Proceedings, p. 293-296 concernent un dispositif de mesure de niveau de carburant dans un réservoir. Selon ces documents, dans un plan de section du réservoir est déterminée la ligne des points de niveau fixe en cas d'inclinaison prédéterminée du réservoir dans une direction, puis la ligne des points de niveau fixe en cas d'inclinaison prédéterminée de même amplitude dans une direction contraire. L'intersection de ces lignes définit un point de référence, par rapport auquel sont disposées symétriquement deux, voire trois ou quatre électrodes destinées à mesurer le niveau de carburant dans le réservoir. Toutefois, ces dispositifs exigent la réalisation, l'installation et le fonctionnement simultané et adéquat de plusieurs jauges distinctes, avec les difficultés et les aléas y associés.

Les techniques connues ne permettent cependant pas de fabriquer des réservoirs munis d'une jauge dont l'emplacement, l'orientation et la forme de la jauge sont optimales pour donner une indication précise quelle que soit l'inclinaison imposée aux réservoirs. Le problème est d'autant plus difficile à résoudre que le réservoir possède généralement une forme complexe comme c'est le cas pour les réservoirs à carburant des véhicules automobiles de fabrication récente en raison de leur emplacement dans la partie inférieure du véhicule imposé par des conditions de sécurité.

L'invention vise à remédier à cet inconvénient en fournissant un procédé qui permette de fabriquer des réservoirs à liquide jaugés dont le signal délivré par la jauge est peu sensible à l'inclinaison du réservoir.

A cet effet, l'invention concerne un procédé pour la fabrication d'un réservoir à liquide muni d'une jauge et fournissant un signal de jauge peu sensible à l'inclinaison du réservoir selon lequel on fabrique un réservoir par toute technique connue et l'on fixe ensuite la jauge en un point de la paroi interne du réservoir qui se caractérise en ce qu'on détermine les paramètres d'emplacement, de forme et d'orientation de la jauge dans le réservoir par un processus d'itérations successives visant à minimiser toute erreur de jaugeage le long de la jauge quelle que soit l'inclinaison du réservoir.

Par réservoir à liquide conformément au procédé selon l'invention on entend désigner tout réservoir pour une matière liquide de nature quelconque et qui est équipé d'un système de mesure et d'affichage du volume de liquide présent dans le réservoir. L'invention s'adresse de préférence à la fabrication de réservoirs à carburant, plus particulièrement ceux que l'on monte sur des véhicules motorisés tels que des véhicules automobiles.

Le réservoir obtenu par le procédé selon l'invention peut être fabriqué par toute technique connue avant d'être équipé de la jauge de volume de liquide. Il peut par exemple être obtenu par emboutissage et/ou soudure de tôles d'acier, par extrusion-soufflage de paraisons en matière plastique de divers types, par coulée ou injection de diverses matières dans un moule ou par toute autre technique apte à la fabrication d'objets creux fermés capables de contenir des liquides. L'invention convient particulièrement pour la fabrication de réservoirs en matière plastique, plus particulièrement ceux obtenus par la technique d'extrusion-soufflage.

Par jauge on entend désigner toute jauge de volume de liquide basée sur l'observation du niveau de la surface libre du liquide contenu dans un réservoir telle qu'une jauge à flotteur, une jauge basée sur la mesure de la variation d'une propriété électrique de la jauge plongée dans le liquide ou une jauge qui combine un système à flotteur et un dispositif électrique qui lui est couplé ou tout autre type de jauge. La jauge conforme à l'invention peut se présenter sous différentes formes telles qu'une jauge rectiligne, circulaire ou de forme quelconque.

Le réservoir à liquide muni d'une jauge obtenu selon l'invention peut être monté sur toute structure et en particulier sur toute structure en mouvement. Souvent, il est destiné à être monté sur un véhicule.

Par véhicule on entend désigner tout engin mobile qui peut se déplacer dans une direction quelconque variant au cours du déplacement selon une pente qui peut elle-même varier aussi au fil du déplacement et plus particulièrement ceux qui peuvent se déplacer sur une surface horizontale ou inclinée.

En particulier, le réservoir à liquide muni d'une jauge obtenu selon l'invention est destiné à être monté sur un véhicule automobile.

Selon l'invention, on détermine les paramètres d'emplacement, d'orientation et de forme de la jauge par un processus d'itérations successives afin de minimiser les erreurs de jaugeage tout au long de celle-ci. Par erreur de jaugeage, on entend désigner celle représentée par toute expression mathématique des variables d'écart entre le volume réel du liquide présent dans le réservoir et le volume affiché par la jauge. Une telle expression mathématique peut, par exemple, être la moyenne des différences entre le volume réel de carburant et le volume affiché par la jauge, calculée pour chaque point d'intersection des surfaces de carburant avec la jauge et exprimée en volume relatif par rapport à la capacité du réservoir. Un autre exemple d'expression mathématique est la racine carrée de la somme des carrés des différences entre le volume réel et le volume affiché. Cette dernière expression est généralement préférée.

Pour calculer l'erreur de jaugeage en un point du réservoir, on peut certes incliner le réservoir, et déterminer la valeur de l'erreur de jaugeage selon l'expression mathématique préalablement adoptée. On peut aussi avantageusement simuler l'inclinaison du réservoir en le maintenant fixe et en inclinant fictivement, pour les besoins de la détermination, le plan de la surface libre du liquide situé dans le réservoir d'un angle d'une même amplitude que celui que le réservoir subirait réellement mais dans la direction opposée à celle du réservoir et en calculant ensuite la quantité réelle de liquide correspondant à toute indication du capteur de la jauge.

Selon l'invention, la quantité réelle du liquide dans le réservoir est déterminée pour chaque indication de la jauge par toute technique appropriée. On peut, par exemple la mesurer à l'aide d'une détermination expérimentale de volumétrie en remplissant le réservoir avec diverses quantités de liquide définies au préalable et en notant les indications correspondantes fournies par la jauge. On peut également calculer cette quantité à partir de la description précise de la forme exacte du réservoir, par exemple, selon une méthode de calcul numérique adaptée à la détermination du volume d'objets de forme quelconque. Cette dernière méthode est généralement préférée.

Avantageusement, la détermination de la quantité réelle de liquide dans le réservoir est réalisée via la description du réservoir au moyen d'un logiciel de conception assistée par ordinateur (CAO).

Afin de garantir une précision maximale de la jauge, on détermine avantageusement dans le réservoir des volumes à l'intérieur desquels les erreurs de jaugeage sont minimales pour toute inclinaison du réservoir et ne dépassent pas certaines valeurs relatives fixées a priori et on fixe la jauge de façon telle que celle-ci reste entièrement localisée à l'intérieur d'un de ces volumes.

La détermination d'un ensemble de volumes correspondants à des erreurs de jaugeage minimales successives de plus en plus petites conduit alors à déterminer dans le réservoir des volumes emboîtés les uns dans les autres qui dessinent dans l'espace l'ébauche de la forme, de l'emplacement et de l'orientation d'une jauge idéale qui serait entièrement localisée à l'intérieur d'un de ces volumes.

De préférence, on détermine les volumes à l'intérieur desquels les erreurs de jaugeage sont minimales en calculant un ensemble de contours le long desquels ces erreurs sont constantes (contours d'iso-erreur de jaugeage), les volumes recherchés étant ceux qui sont déterminés par l'ensemble des contours d'iso-erreur de jaugeage correspondant à une erreur de jaugeage donnée.

Selon l'invention, on peut obtenir les contours d'iso-erreur de jaugeage en calculant, pour un ensemble de points répartis uniformément à l'intérieur du réservoir, la valeur de l'erreur de jaugeage. Il suffit alors de relier entre eux les points où l'erreur est identique pour obtenir les contours souhaités. Afin que ceux-ci puissent aisément être visualisés, il est préférable de réaliser au préalable une coupe du réservoir par un faisceau de plans parallèles et de tracer ensuite les divers contours d'iso-erreur de jaugeage dans chacun de ces plans.

Ces contours d'iso-erreur de jaugeage ne dépendent que de la géométrie du réservoir, des inclinaisons imposées dans le cahier des charges et du choix de l'erreur admise. Ils sont en revanche indépendants des paramètres de la jauge. En pratique, pour permettre la détermination des erreurs liées à l'emploi d'une jauge particulière, on détermine une erreur globale propre à la jauge. Cette erreur globale de jauge dépend du réservoir, des inclinaisons, des paramètres de la jauge et de l'expression mathématique choisie pour représenter l'erreur de jaugeage. Généralement, pour mesurer l'erreur globale propre à la jauge, on intègre les valeurs de l'erreur de jaugeage le long de l'axe principal de la jauge et on divise la valeur de l'intégrale curviligne ainsi obtenue par la longueur dudit axe principal.

La détermination de l'emplacement, de la forme et de l'orientation de la jauge idéale procède d'un processus itératif en plusieurs cycles. Lors du premier cycle de ce processus, on choisit une jauge de référence arbitraire qui ne respecte que la seule contrainte de se trouver à l'intérieur du réservoir. On détermine pour cette jauge de référence la valeur de l'erreur globale associée à la jauge en intégrant les valeurs de l'erreur de jaugeage le long de l'axe principal de la jauge et en divisant la valeur de l'intégrale curviligne ainsi obtenue par la longueur dudit axe principal et on détermine un volume à l'intérieur duquel les erreurs de jaugeage sont minimales pour toute inclinaison du réservoir. Lors d'un deuxième cycle du processus itératif, on remplace alors la jauge de référence utilisée dans le premier cycle par une nouvelle jauge entièrement contenue dans le volume à l'intérieur duquel les erreurs de jaugeage, sont les plus faibles. On recommence ensuite le calcul de l'erreur globale de la nouvelle jauge. On itère alors de la sorte le processus de détermination de la jauge en recommençant les déterminations des paramètres de forme, d'emplacement et d'orientation de la jauge par le remplacement à chaque cycle d'itération du processus, de la jauge utilisée par une nouvelle jauge de meilleure précision contenue dans le volume plus réduit à l'intérieur duquel les erreurs de jaugeage sont minimisées. On calcule également à chaque cycle la valeur de l'erreur globale associée à la jauge. On poursuit ce processus d'itérations successives jusqu'à ce que l'erreur globale ne dépasse plus une valeur cible fixée a priori.

Selon un mode de réalisation préféré de l'invention, on détermine les paramètres de forme, d'emplacement et d'orientation de la jauge à l'aide d'un ordinateur et d'un logiciel qui automatisent le processus d'itération et de minimisation de l'erreur globale de jauge.

Le procédé selon l'invention convient pour la fabrication de réservoirs équipés d'une jauge tels que ceux qui sont destinés à équiper les véhicules automobiles devant répondre à certaines exigences de sécurité en ce qui concerne la localisation du réservoir dans une partie du véhicule qui n'est pas exposée aux chocs et aux déformations.

Le procédé selon l'invention convient particulièrement bien pour la fabrication de réservoirs en matière plastique munis d'une jauge et produits notamment par la technique d'extrusion - soufflage. Ce mode de production permet l'obtention de réservoirs de forme très profilée adaptée à celle des éléments de carrosserie dans lesquels ils sont appelés à être fixés. A titre de matière plastique on peut notamment citer les homopolymères ou les copolymères d'une oléfine et en particulier, le polyéthylène.

L'invention concerne également un réservoir équipé d'une jauge de liquide peu sensible à l'inclinaison du réservoir dans lequel la jauge est fixée, en un point de la paroi interne du réservoir dont l'emplacement est déterminé par un processus d'itérations successives, et dont l'erreur de jaugeage est minimale quelle que soit l'inclinaison du réservoir.

L'exemple concret qui va suivre a pour but d'illustrer l'invention sans pour autant en limiter sa portée.

### Exemple

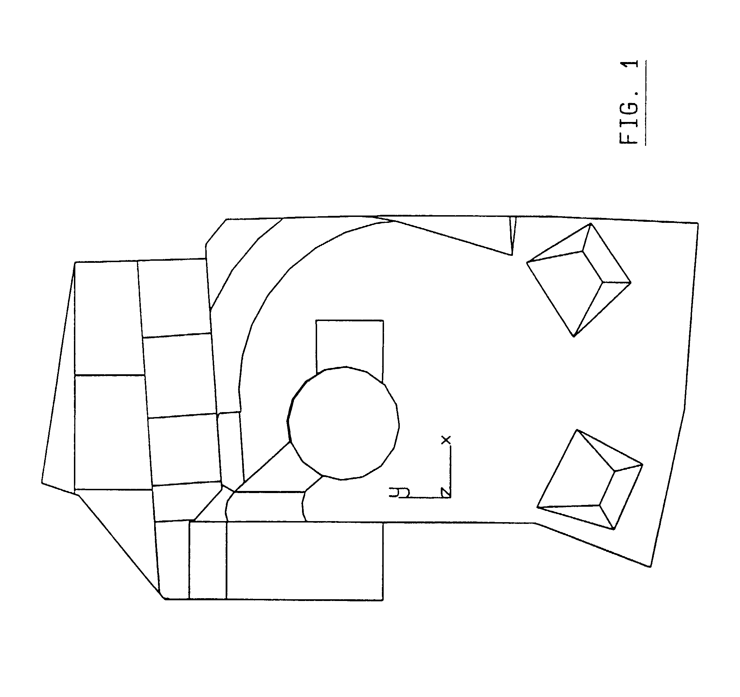

On a fabriqué un réservoir de polyéthylène de forme complexe dont on dispose de la description détaillée sous forme de fichiers de données informatiques associés au logiciel de conception assistée par ordinateur (CAO) (logiciel de CAO EUCLID ®-IS, marque déposée de la société MATRA DATAVISION). A l'aide de ces données et du logiciel, il est ainsi possible de représenter le réservoir sous n'importe quel angle de vue, d'y réaliser des coupes par des plans quelconques et de calculer le volume global du réservoir ainsi que tous les volumes délimités par les parois du réservoir et un plan de coupe quelconque. A titre d'illustration, la figure 1 représente une vue de la partie inférieure du réservoir fournie par le logiciel de CAO.

On s'est ensuite choisi une jauge de référence verticale, rectiligne et fixée arbitrairement sur la partie centrale de la paroi supérieure du réservoir. On s'arrange aussi pour que la jauge de référence choisie ait une longueur utile suffisante, c'est-à-dire en pratique, que les deux points situés aux extrémités de la jauge soient les derniers points situés sur une ligne imaginaire ayant la même direction que la jauge et par lesquels il soit possible de faire passer un plan qui possède une intersection ou un point de tangence avec le réservoir.

On a ensuite jalonné la jauge de référence obtenue par un ensemble de points répartis de manière plus ou moins régulière sur toute sa longueur.

On connaît d'autre part, par le cahier des charges imposé au réservoir, les inclinaisons conventionnelles que le véhicule et, partant, le réservoir qui y est monté, doivent pouvoir être capable de supporter, à savoir :
- horizontale,
- devers gauche de 8° d'angle,
- devers droit de 8° d'angle,
- avant de 11° d'angle et
- arrière de 11° d'angle.

A l'aide du logiciel de CAO, on a ensuite coupé le réservoir par un ensemble de plans parallèles à ces inclinaisons et passant par chacun des points jalonnant la jauge de référence et on a calculé, pour chacun de ces points, le volume compris entre la paroi inférieure du réservoir et chacun des plans de coupe.

Pour chaque inclinaison prédéfinie ci-dessus, on a obtenu une relation donnant le volume réel qu'occuperait le liquide en fonction de la position sur la jauge du point d'intersection de celle-ci avec la surface du liquide.

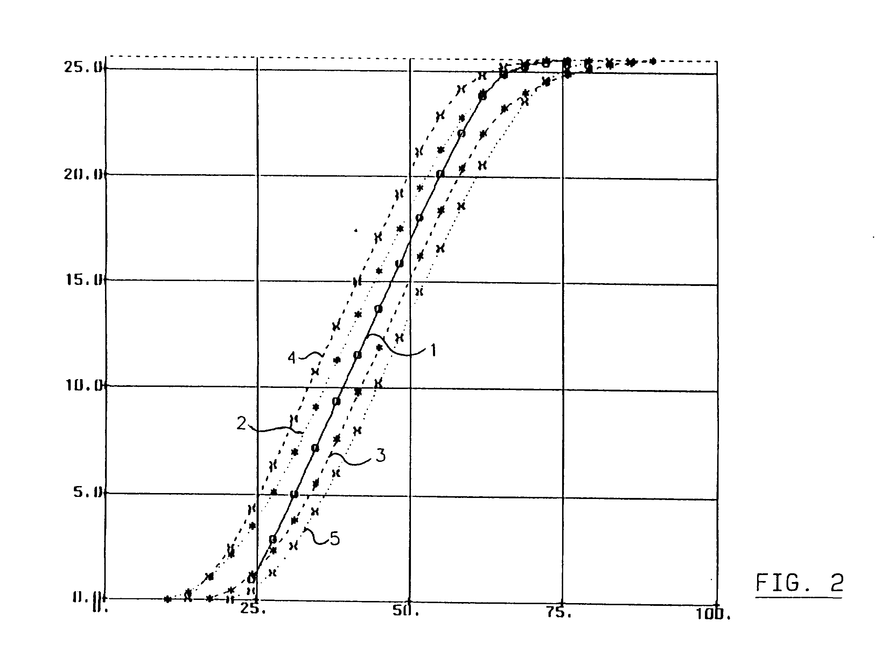

Il a ensuite été tracé 5 courbes de jauge correspondant aux 5 inclinaisons imposées donnant le volume réel de liquide contenu dans le réservoir (en ordonnées) en fonction de l'indication de la position relative de la jauge, exprimée en pourcents de sa trajectoire. La figure 2 représente les 5 courbes de jauge repérées 1 à 5 et correspondant, respectivement à :
- courbe 1 : inclinaison horizontale,
- courbe 2 : inclinaison devers gauche,
- courbe 3 : inclinaison devers droit,
- courbe 4 : inclinaison avant et
- courbe 5 : inclinaison arrière.

On a ensuite quadrillé l'ensemble du volume intérieur du réservoir au moyen d'une grille tridimensionnelle de points espacés régulièrement. Par chaque point, on a fait passer 5 plans parallèles aux 5 inclinaisons imposées et déterminé leur intersection avec la jauge de référence. Le report de ces points sur les courbes de jauge a permis d'en déduire 5 volumes le plus souvent différents. En chaque point, on a calculé à titre d'erreur de jaugeage l'écart-type des 5 volumes obtenus.

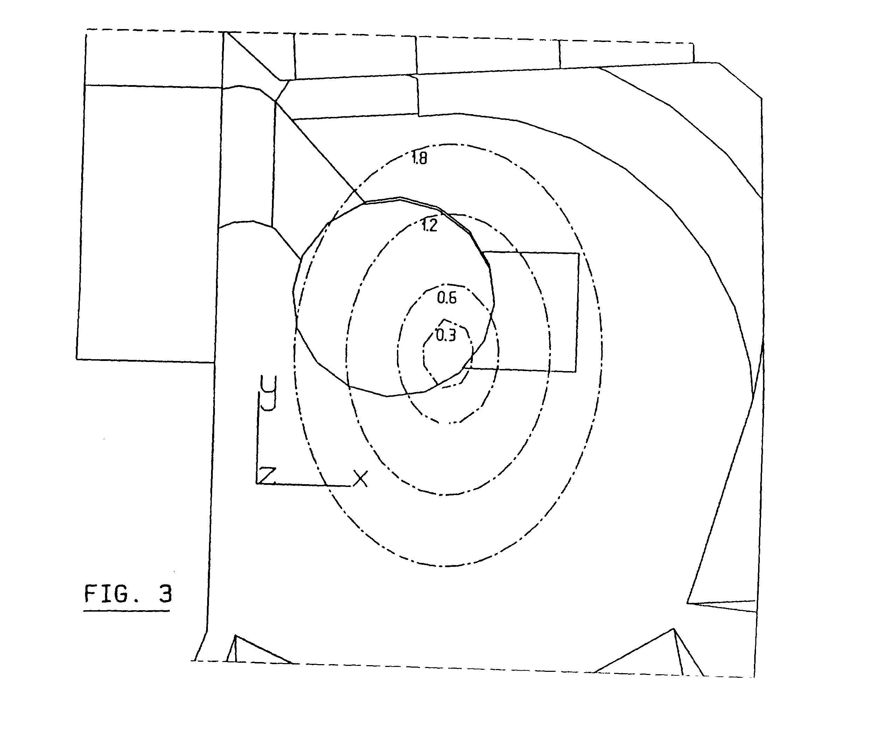

On s'est ensuite donné un ensemble de coupes horizontales du réservoir ainsi que quelques taux d'erreur admissibles et l'on a représenté les points correspondants à ces taux d'erreurs sur les divers plans de coupe. On a aussi relié les points qui correspondent à un même taux d'erreur par une ligne et on a obtenu les contours d'iso-erreur de jaugeage. La figure 3 représente les courbes d'iso-erreur 0,3 litre, 0,6 litre, 1,2 litre et 1,8 litre obtenues dans le plan de coupe horizontal particulier situé à une hauteur de 101,3 mm par rapport au fond du réservoir. On a aussi représenté sur cette figure la projection sur le plan de coupe de la partie du réservoir proche des contours d'iso-erreur.

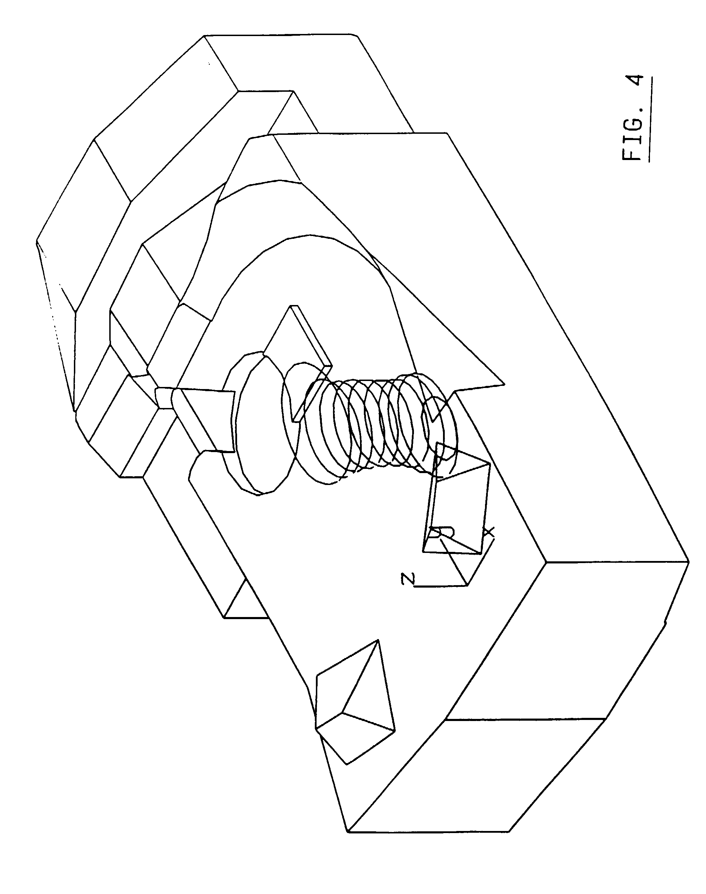

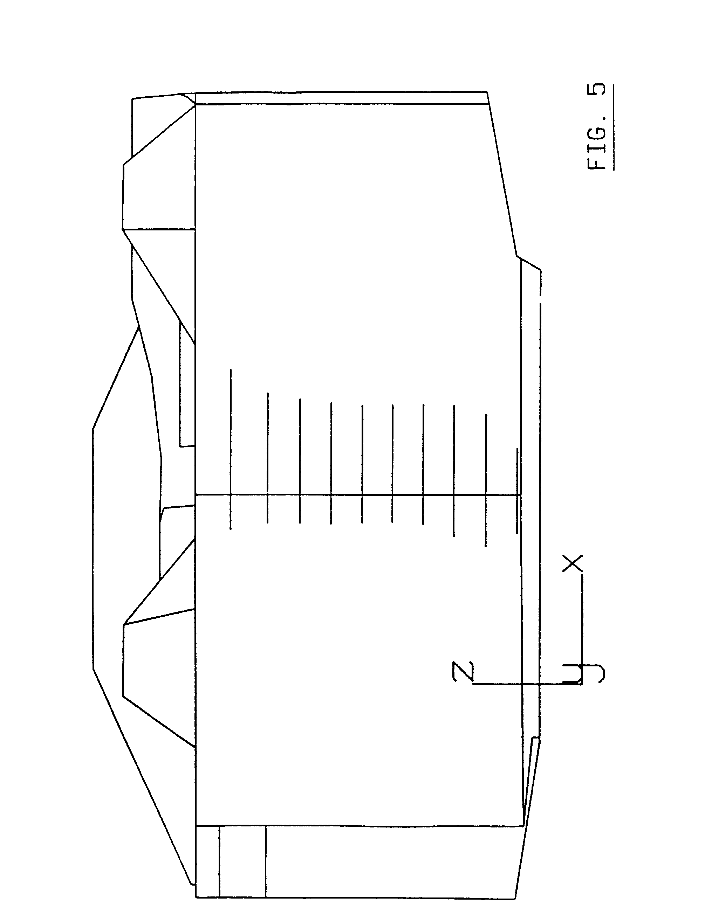

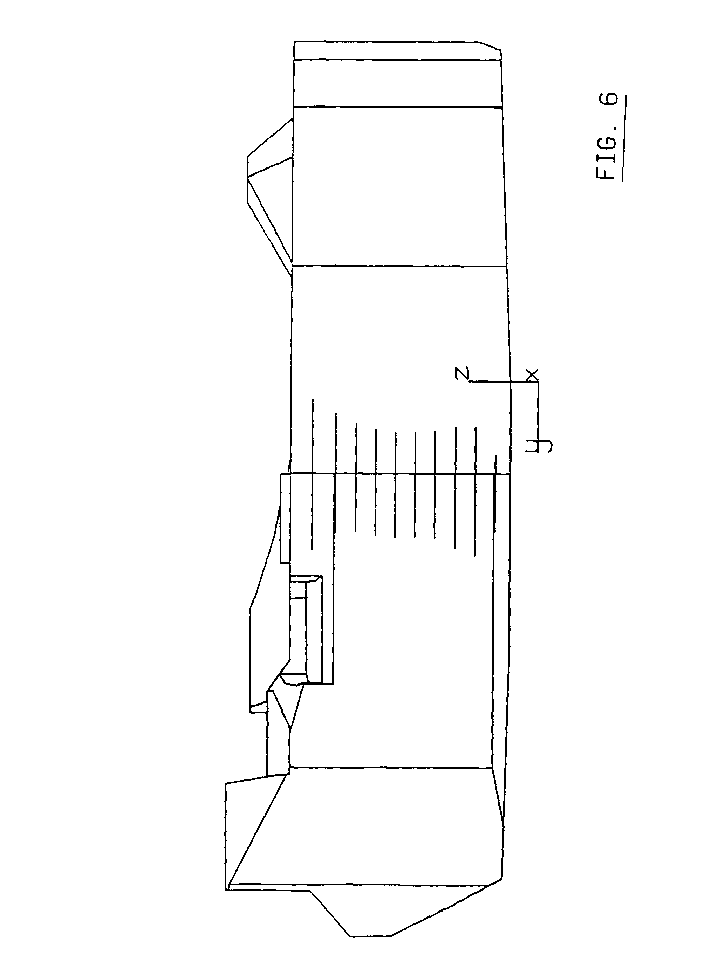

Pour un taux d'erreur donné, on a représenté les contours associés à différents plans de coupe du réservoir. On voit aux figures 4, 5 et 6 que ces contours délimitent un volume interne au réservoir à l'intérieur duquel l'erreur est inférieure à une certaine limite, choisie en l'occurence de 0,6 litre. La valeur de l'erreur globale associée à la jauge a été calculée en intégrant les erreurs de jaugeage le long de l'axe principal de la jauge choisie et en divisant par la longueur dudit axe principal. La valeur obtenue de la sorte a été de 0,53 litre.

On a ensuite choisi une nouvelle jauge disposée à l'intérieur de ce volume et on a recommencé le calcul de l'erreur globale de la jauge. Le résultat obtenu a été de 0,42 litre.

A ce stade du calcul, la précision obtenue a été jugée suffisante pour répondre aux exigences du cahier des charges. Au besoin, il aurait encore été possible d'affiner la précision de la jauge en diminuant le taux d'erreur de jaugeage admissible et en calculant une nouvelle erreur globale pour une jauge ultime qui se situerait à l'intérieur du nouveau volume défini par les contours d'iso-erreurs correspondant au taux d'erreur limite abaissé. On pourrait constater de la sorte que les paramètres de la jauge idéale convergent bien vers un ensemble de valeurs stables.

## Revendications

1. Procédé pour la fabrication d'un réservoir à liquide muni d'une jauge et fournissant un signal de jauge peu sensible à l'inclinaison du réservoir selon lequel on fabrique un réservoir par toute technique connue et l'on fixe ensuite la jauge en un point de la paroi interne du réservoir, caractérisé en ce que l'on détermine les paramètres d'emplacement, de forme et d'orientation de la jauge dans le réservoir par un processus d'itérations successives visant à minimiser toute erreur de jaugeage le long de la jauge quelle que soit l'inclinaison du réservoir.

2. Procédé selon la revendication 1, caractérisé en ce que le réservoir à liquide muni d'une jauge est destiné à être monté sur un véhicule.

3. Procédé selon la revendication 1 ou 2, caractérisé en ce qu'on détermine dans le réservoir des volumes à l'intérieur desquels les erreurs de jaugeage sont minimales pour toute inclinaison du réservoir et ne dépassent pas certaines valeurs relatives fixées a priori et on fixe la jauge de façon telle que celle-ci reste entièrement localisée à l'intérieur d'un de ces volumes.

4. Procédé selon l'une quelconque des revendications 1 à 3, caractérisé en ce que les volumes dans lesquels les erreurs de jaugeage sont minimales sont déterminés en calculant un ensemble de contours le long desquels ces erreurs de jaugeage sont constantes (contours d'iso-erreur de jaugeage), les volumes recherchés étant ceux qui sont déterminés par l'ensemble des contours d'iso-erreur de jaugeage correspondant à une erreur de jaugeage donnée.

5. Procédé selon l'une quelconque des revendications 1 à 4, caractérisé en ce que pour appliquer le processus d'itérations successives de détermination de l'emplacement, de la forme et de l'orientation de la jauge :
a) lors d'un premier cycle, on choisit une jauge de référence arbitraire qui ne respecte que la seule contrainte de se trouver à l'intérieur du réservoir, on détermine pour cette jauge la valeur d'erreur globale propre à la jauge en intégrant les valeurs de l'erreur de jaugeage le long de l'axe principal de la jauge et en divisant la valeur de l'intégrale curviligne ainsi obtenue par la longueur dudit axe principal et on détermine, dans le réservoir, un volume à l'intérieur duquel les erreurs de jaugeage sont minimales pour toute inclinaison du réservoir,
b) lors d'un second cycle, on remplace la jauge par une nouvelle jauge entièrement contenue dans le volume à l'intérieur duquel les erreurs sont les plus faibles, on recommence le calcul de l'erreur globale pour la nouvelle jauge et on détermine, dans le réservoir, un volume plus réduit à l'intérieur duquel les erreurs de jaugeage sont minimisées et
c) on poursuit le processus d'itérations successives jusqu'à ce que l'erreur globale ne dépasse plus une valeur cible fixée a priori.

6. Procédé selon l'une quelconque des revendications 1 à 5, caractérisé en ce que l'erreur de jaugeage en un point du réservoir est calculée en simulant l'inclinaison du réservoir en maintenant le réservoir fixe et en inclinant fictivement le plan de la surface libre du liquide situé dans le réservoir d'un angle d'une même amplitude que celui que le réservoir subirait réellement mais dans la direction opposée à celle du réservoir et en calculant ensuite le volume réel de liquide correspondant à toute indication du capteur de la jauge.

7. Procédé selon l'une quelconque des revendications 1 à 6, caractérisé en ce que la détermination de la quantité réelle de liquide est réalisée selon une méthode de calcul numérique adaptée à la détermination du volume d'objets de forme quelconque.

8. Procédé selon l'une quelconque des revendications 1 à 7, caractérisé en ce que la détermination de la quantité réelle de liquide est réalisée au moyen d'un logiciel de conception assistée par ordinateur.

9. Procédé selon l'une quelconque des revendications 1 à 8, caractérisé en ce que les paramètres de la jauge sont déterminés à l'aide d'un ordinateur et d'un logiciel qui automatisent le processus d'itération et de minimisation de l'erreur globale de jauge.

10. Utilisation du procédé selon l'une quelconque des revendications 1 à 9 pour la fabrication d'un réservoir en matière plastique muni d'une jauge et produit par la technique d'extrusion-soufflage.

11. Utilisation du procédé selon la revendication 10, caractérisé en ce que la matière plastique comprend au moins un homopolymère ou un copolymère d'une oléfine.

## Patentansprüche

1. Verfahren zur Herstellung eines Flüssigkeitsbehälters, der mit einem Füllstandanzeiger versehen ist und ein Füllstandsignal liefert, das hinsichtlich der Neigung des Behälters wenig empfindlich ist, bei dem man durch jegliche bekannte Technik einen Behälter fertigt und dann daran den Füllstandanzeiger an einer Stelle der Innenwand des Behälters anbringt, dadurch gekennzeichnet, dass man die Parameter für Ort, Form und Ausrichtung des Füllstandanzeigers im Behälter durch einen Prozess sukzessiver Iterationen bestimmt, die darauf abzielen, jeglichen Füllstandmessfehler entlang des Füllstandanzeigers zu minimieren, wie auch immer die Neigung des Behälters sein mag.

2. Verfahren nach Anspruch 1, dadurch gekennzeichnet, dass der mit einem Füllstandanzeiger versehene Flüssigkeitsbehälter zur Anbringung auf einem Fahrzeug vorgesehen ist.

3. Verfahren nach Anspruch 1 oder 2, dadurch gekennzeichnet, dass man im Behälter Volumina bestimmt, im Inneren von welchen die Füllstandmessfehler für jede Neigung des Behälters minimal sind und gewisse a priori festgelegte Relativwerte nicht überschreiten, und man den Füllstandanzeiger derart anbringt, dass dieser völlig im Inneren von einem dieser Volumina lokalisiert bleibt.

4. Verfahren nach einem der Ansprüche 1 bis 3, dadurch gekennzeichnet, dass die Volumina, in denen die Füllstandmessfehler minimal sind, bestimmt werden, indem man ein Kollektiv von Konturen berechnet, entlang von welchen diese Füllstandmessfehler konstant sind (Isofüllstandmessfehlerkonturen), wobei die gesuchten Volumina diejenigen sind, die durch das Kollektiv der Isofüllstandmessfehlerkonturen bestimmt werden, welche einem gegebenen Füllstandmessfehler entsprechen.

5. Verfahren nach einem der Ansprüche 1 bis 4, dadurch gekennzeichnet, dass zur Anwendung des Prozesses sukzessiver Iterationen zur Bestimmung des Orts, der Form und der Ausrichtung des Füllstandanzeigers:
a) man bei einem ersten Zyklus einen willkürlichen Bezugs-Füllstandanzeiger wählt, der nur die einzige einschränkende Bedingung einhält, dass er sich im Inneren des Behälters befindet, man für diesen Füllstandanzeiger den Wert des Gesamtfehlers bestimmt, der diesem Füllstandanzeiger zu eigen ist, indem man die Werte des Füllstandmessfehlers entlang der Hauptachse des Füllstandanzeigers integriert und den Wert des so erhaltenen krummlinigen Integrals durch die Länge der besagten Hauptachse dividiert, und man, im Behälter, ein Volumen bestimmt, im Inneren von welchem die Füllstandmessfehler für jede Neigung des Behälters minimal sind,
b) man bei einem zweiten Zyklus den Füllstandanzeiger durch einen neuen Füllstandanzeiger ersetzt, der völlig in dem Volumen enthalten ist, im Inneren von welchem die Füllstandmessfehler am geringsten sind, man wieder mit der Berechnung des Gesamtfehlers für den neuen Füllstandanzeiger beginnt, und man, im Behälter, ein kleineres Volumen bestimmt, im Inneren von welchem die Füllstandmessfehler minimiert sind, und
c) man den Prozess der sukzessiven Iterationen fortsetzt, bis der Gesamtfehler einen a priori festgelegten Zielwert nicht mehr überschreitet.

6. Verfahren nach einem der Ansprüche 1 bis 5, dadurch gekennzeichnet, dass der Füllstandmessfehler an einer Stelle des Behälters berechnet wird, indem man die Neigung des Behälters simuliert, indem man den Behälter stationär hält und indem man dort die Ebene der freien Oberfläche der im Behälter befindlichen Flüssigkeit fiktiv neigt, um einen Winkel mit einer selben Amplitude wie demjenigen, welchem der Behälter tatsächlich ausgesetzt wäre, jedoch in der entgegengesetzten Richtung zu derjenigen des Behälters, und indem man dann das tatsächliche Flüssigkeitsvolumen berechnet, das jeder Neigung des Aufnehmers des Füllstandanzeigers entspricht.

7. Verfahren nach einem der Ansprüche 1 bis 6, dadurch gekennzeichnet, dass die Bestimmung der tatsächlichen Flüssigkeitsmenge gemäß einem an die Bestimmung des Volumens von Gegenständen mit beliebiger Form angepassten numerischen Rechenverfahren durchgeführt wird.

8. Verfahren nach einem der Ansprüche 1 bis 7, dadurch gekennzeichnet, dass die Bestimmung der tatsächlichen Flüssigkeitsmenge rechnergestützt mittels einer Auslegungssoftware durchgeführt wird.

9. Verfahren nach einem der Ansprüche 1 bis 8, dadurch gekennzeichnet, dass die Parameter des Füllstandanzeigers mit Hilfe eines Rechners und einer Software bestimmt werden, die den Iterationsprozess und den Prozess zur Minimierung des Gesamtfehlers des Füllstandanzeigers automatisieren.

10. Verwendung des Verfahrens nach einem der Ansprüche 1 bis 9 zur Herstellung eines Kunststoffbehälters, der mit einem Füllstandanzeiger versehen und durch die Technik des Extrusionsblasens produziert worden ist.

11. Verwendung des Verfahrens nach Anspruch 10, dadurch gekennzeichnet, dass der Kunststoff mindestens ein Homopolymer oder ein Copolymer eines Olefins umfasst.

## Claims

1. Method for fabricating a liquid tank equipped with a gauge and supplying a gauge signal that is not very sensitive to the inclination of the tank, whereby a tank is fabricated by any known technique and the gauge is then attached at a point on the internal wall of the tank, characterized in that the parameters of the location, shape and orientation of the gauge within the tank are determined by a process of successive iterations aimed at minimizing any measurement error along the gauge irrespective of the inclination of the tank.

2. Method according to Claim 1, characterized in that the liquid tank equipped with a gauge is intended to be mounted on a vehicle.

3. Method according to Claim 1 or 2, characterized in that volumes within which the measurement errors are minimal for any inclination of the tank and do not exceed certain pre-set relative values are determined in the tank, and the gauge is attached in such a way that it remains completely situated within one of these volumes.

4. Method according to any one of Claims 1 to 3, characterized in that the volumes within which the measurement errors are minimal are determined by calculating a set of contours along which these measurement errors are constant (lines of equal measurement error), the sought-after volumes being those which are-determined by all of the lines of equal measurement error corresponding to a given measurement error.

5. Method according to any one of Claims 1 to 4, characterized in that in order to apply the process of successive iterations for determining the location, shape and orientation of the gauge:
a) in a first cycle, an arbitrary reference gauge that meets only the constraint of being inside the tank is selected, the overall error value specific to the gauge is determined for this gauge by integrating the values of the measurement error along the main axis of the gauge and dividing the value of the line integral thus obtained by the length of the said main axis, and a volume within which the measurement errors are minimal for any inclination of the tank is determined, within the tank,
b) in a second cycle, the gauge is replaced by another gauge that lies completely within the volume within which the errors are the lowest, the calculation of the overall error for the new gauge is recommenced and a smaller volume within which the measurement errors are minimized is determined, within the tank, and
c) the process of successive iterations is continued until the overall error no longer exceeds a pre-set target value.

6. Method according to any one of Claims 1 to 5, characterized in that the measurement error at a point in the tank is calculated by simulating the inclination of the tank by keeping the tank stationary and fictitiously inclining the plane of the free surface of the liquid contained in the tank by an angle of the same amplitude as the tank would actually experience but in the opposite direction to that of the tank and then calculating the actual volume of liquid corresponding to any indication given by the gauge sensor.

7. Method according to any one of Claims 1 to 6, characterized in that the actual amount of liquid is determined using a numerical method of calculation suited to determining the volume of objects of any shape.

8. Method according to any one of Claims 1 to 7, characterized in that the actual amount of liquid is determined using computer-aided design software.

9. Method according to any one of Claims 1 to 8, characterized in that the parameters of the gauge are determined using a computer and software which automate the iteration process and the process of minimizing the overall error of the gauge.

10. Use of the method according to any one of Claims 1 to 9 for the fabrication of a plastic tank equipped with a gauge and produced by the extrusion blow-moulding technique.

11. Use of the method according to Claim 10, characterized in that the plastic contains at least one homopolymer or olefin copolymer.
